# EUROPEAN PATENT SPECIFICATION

(11) **EP 4 220 522 B1**
(45) Date of publication and mention of the grant of the patent: **19.11.2025**
(21) Application number: 21884746.5
(22) Date of filing: 08.09.2021
(51) Int. Cl.: G06Q 30/02, G06Q 30/0241, G06F 16/9536, G06Q 30/0251

(54) **WEBPAGE ADVERTISEMENT FILTERING METHOD, ELECTRONIC DEVICE, AND STORAGE MEDIUM**
VERFAHREN ZUR FILTERUNG VON WEBSEITENWERBUNGEN, ELEKTRONISCHE VORRICHTUNG UND SPEICHERMEDIUM
PROCÉDÉ DE FILTRAGE DE PUBLICITÉS DE PAGE WEB, DISPOSITIF ÉLECTRONIQUE ET SUPPORT D'ENREGISTREMENT

(30) Priority: 31.10.2020 CN 202011198965
(43) Date of publication of application: 02.08.2023
(73) Proprietor: Huawei Technologies Co., Ltd., Shenzhen, Guangdong 518129 (CN)
(72) Inventor: CHEN, Ying, Shenzhen, Guangdong 518129 (CN); LIU, Yaoming, Shenzhen, Guangdong 518129 (CN); ZENG, Qiang, Shenzhen, Guangdong 518129 (CN)
(74) Representative: Maiwald GmbH
(86) International application number: PCT/CN2021/117069
(87) International publication number: WO 2022/089016

(56) References cited:
- CN-A- 101 895 868
- CN-A- 102 768 664
- CN-A- 105 512 126
- CN-A- 107 070 729
- US-A1- 2006 253 581
- US-B1- 10 262 343

## Description

### TECHNICAL FIELD

This application relates to the field of terminal technologies, and in particular, to a web page advertisement filtering method, an electronic device, and a storage medium.

### BACKGROUND

With vigorous development of electronic commerce, various advertisements are placed on more web pages. Some advertisements cover content of the web page or are irrelevant to the web page. Some advertisements reduce a web page browsing speed. All these advertisements reduce online experience of a user. Therefore, software, namely, an advertisement blocker, installed on a browser to block all advertisements emerges. However, in this case, an advertising publisher cannot pay, due to less money made from advertising, for free content that the user enjoys. In addition, an advertiser producing a high-quality advertisement fails to connect with the user, and the user cannot view a useful and relevant advertisement. The US 20060253581 A1 refers to a method and a system involving receiving an indicator of an attempted interaction of a client computing facility. The CN 102 768 664 A refers to a method and a system of distributed webpage Ad blocking. The CN 107 070 729 A refers to a method and a system in network linking. The CN 101 895 868 A refers to a handset to filter a fallacious message. The CN 105 512 126 A refers to a web advertisement filter. The US 10 262 343 refers to an AD-blocking system using rule-based filtering of internet traffic.

### SUMMARY

In view of the foregoing problem, it is necessary to provide a web page advertisement filtering method, an electronic device, and a storage medium, so that an existing client can generate an advertisement filtering rule without intervention and existence of a server. The invention is set out in the appended set of claims.

A first aspect of the present invention provides a web page advertisement filtering method, applied to a main client. The method includes:
receiving a to-be-filtered web page element sent by a client in a local area network in which the main client is located;
sending first query broadcast information including the to-be-filtered web page element to the local area network in which the main client is located;
receiving first query feedback information generated by all clients in the local area network based on the first query broadcast information;
if the first query feedback information meets a preset condition, determining that the to-be-filtered web page element is an advertisement; and
updating an advertisement filtering rule based on the to-be-filtered web page element that is an advertisement.

Preferably, the method further includes:
delivering an updated advertisement filtering rule to a client in the local area network other than the main client.

Preferably, the method further includes:
filtering a web page advertisement according to the updated advertisement filtering rule.

Preferably, before the receiving a to-be-filtered web page element sent by a client in a local area network in which the main client is located, the method further includes:
determining, in a plurality of clients located in a same local area network, a first client as the main client.

Preferably, the determining, in a plurality of clients located in a same local area network, a first client as the main client includes:
sending recommendation broadcast information including a request for a vote for the first client to the local area network in which the first client is located;
receiving recommendation feedback information generated by a client in the local area network other than the first client based on the recommendation broadcast information; and
determining the first client as the main client if the recommendation feedback information meets a preset condition.

Preferably, after the determining the first client as the main client if the recommendation feedback information meets a preset condition, the method further includes:
sending notification broadcast information including that the first client is the main client to the local area network in which the main client is located.

Preferably, the method further includes:
receiving query broadcast information that is sent by a fifth client in a local area network in which the fifth client is located and that is used to query whether the fifth client is the main client, where the fifth client is a client newly joining the local area network after the advertisement filtering rule is updated;
returning acknowledgment information to the fifth client based on the query broadcast information;
receiving an advertisement filtering rule request sent by the fifth client; and
sending the advertisement filtering rule to the fifth client based on the advertisement filtering rule request.

Preferably, the method further includes:
receiving a to-be-displayed web page element sent by the client in the local area network in which the main client is located;
sending second query broadcast information including the to-be-displayed web page element to the local area network in which the main client is located;
receiving second query feedback information generated by all the clients in the local area network based on the second query broadcast information;
if the second query feedback information meets a preset rule, determining that the to-be-displayed web page element is not an advertisement; and
updating the advertisement filtering rule based on the to-be-displayed web page element that is not an advertisement.

A second aspect of the present invention provides an electronic device, where the electronic device includes a processor and a memory. The processor is configured to implement the web page advertisement filtering method according to any one of the foregoing items when executing at least one instruction stored in the memory.

A third aspect of the present invention provides a computer-readable storage medium, where the computer-readable storage medium stores at least one instruction. The at least one instruction is executed by a processor to implement the web page advertisement filtering method according to any one of the foregoing items.

In this solution, by receiving the to-be-filtered web page element sent by the client in the local area network in which the main client is located, a vote is initiated in the local area network, whether the to-be-filtered web page element is an advertisement is determined through voting, and the advertisement filtering rule is generated accordingly. Therefore, an existing client can generate the advertisement filtering rule without intervention and existence of a server.

### BRIEF DESCRIPTION OF DRAWINGS

FIG. 1 is a schematic diagram of an application environment according to an embodiment of the present invention;
FIG. 2 is a schematic diagram of an electronic device according to an embodiment of the present invention;
FIG. 3 is a flowchart of a method for determining a main client in a web page advertisement filtering method according to an embodiment of the present invention;
FIG. 4 is a schematic diagram of determining a main client in a plurality of clients in a same local area network according to an embodiment of the present invention;
FIG. 5 is a flowchart of an advertisement filtering rule generation method in a web page advertisement filtering method according to an embodiment of the present invention;
FIG. 6 is a schematic diagram of generating advertisement filtering rules by a plurality of clients in a same local area network according to an embodiment of the present invention;
FIG. 7 is a flowchart of a method for blocking an advertisement by a fifth client in a local area network in a web page advertisement filtering method according to an embodiment of the present invention;
FIG. 8 is a schematic diagram of blocking an advertisement by a fifth client in a same local area network according to an embodiment of the present invention;
FIG. 9 is a flowchart of an advertisement filtering rule re-generation method in a web page advertisement filtering method according to an embodiment of the present invention;
FIG. 10 is a schematic diagram of re-generating advertisement filtering rules by a plurality of clients in a same local area network according to an embodiment of the present invention; and
FIG. 11 is a flowchart of a web page advertisement filtering method according to an embodiment of the present invention.

Description of reference signs of main components:

| | |
|---|---|
| Electronic device | 1 |
| Network device | 2 |
| Client | 10 |
| Communication module | 20 |
| Server | 3 |
| Memory | 30 |
| Processor | 40 |

### DESCRIPTION OF EMBODIMENTS

The terms "first", "second", "third", "fourth", and "fifth" mentioned below are used merely for the purpose of description, and shall not be construed as indicating or implying relative importance or implying a quantity of indicated technical features. Therefore, a feature preceded by "first", "second", "third", "fourth", or "fifth" may explicitly or implicitly include one or more features. In descriptions of embodiments of this application, words such as "for example" are used to represent giving an example, an illustration, or a description. Any embodiment or design solution described as "for example" in embodiments of this application should not be explained as being more preferred or having more advantages than another embodiment or design solution. Exactly, use of the words such as "for example" is intended to present a related concept in a specific manner.

Unless otherwise defined, all technical and scientific terms used in this specification have same meanings as those usually understood by a person skilled in the art of this application. The term used in this specification of this application herein is for the purpose of describing particular embodiments only and is not intended to be limiting of the present invention. It should be understood that in this application, unless otherwise specified, "a plurality of" means two or more than two.

According to a web page advertisement filtering method in an embodiment of the present invention, a client may transmit advertisement feedback information to a server based on a user operation, the server generates an advertisement filtering rule based on the advertisement feedback information, and delivers the advertisement filtering rule to each client, and the client filters or blocks an advertisement according to the advertisement filtering rule when loading a web page. However, the method relies on the filtering rule generated by the server. If the client is unable to connect to the server, the client cannot update the advertisement filtering rule, and consequently cannot identify and filter a new advertisement. In addition, the server needs to adjust the advertisement filtering rule based on feedback of the client. Regardless of whether the server adjusts the advertisement filtering rule manually or intelligently, there may be a specific delay in delivering the advertisement filtering rule. In addition, load of the server increases with a large quantity of client requests generated due to an increasing quantity of clients, and with changes of the web page and a form and emergence of the new web page.

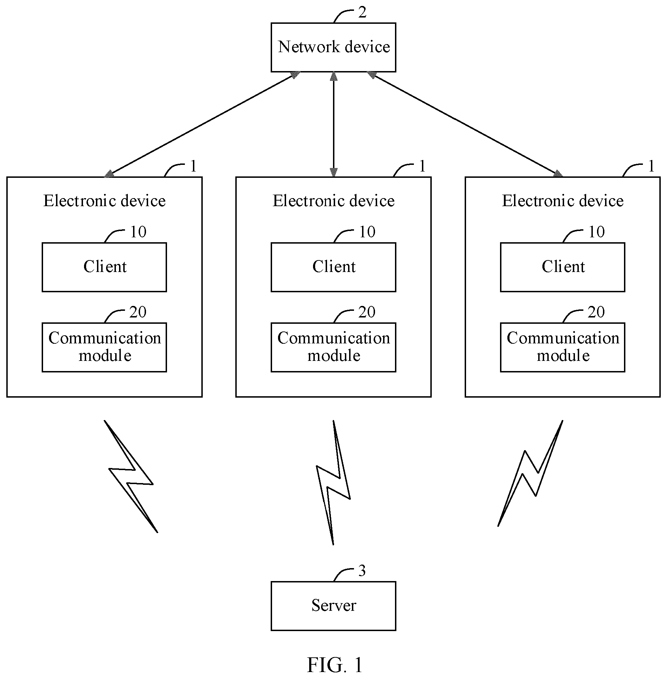

FIG. 1 is a schematic diagram of an application environment according to an embodiment of the present invention. As shown in FIG. 1, a plurality of electronic devices 1 are connected together by using a network device 2, so that the plurality of electronic devices 1 are located in a same local area network. Each electronic device 1 includes a client 10. The client 10 is user-independent. Even if a same user is on different clients 10, the clients 10 are also different clients. Each electronic device 1 further includes a communication module 20. The communication module 20 is configured to connect the electronic device 1 to the network device 2. In FIG. 1, the electronic device 1 is wiredly connected to the network device 2. It is clear that the electronic device 1 and the network device 2 are not limited to a wired connection in FIG. 1 but may alternatively be wirelessly connected. The network device 2 may be at least one of network devices such as a switch, a base station, and a router. For example, the network device 2 is three switches connected to each other, or one switch and one router connected to each other. The network device 2 may forward information of the electronic device 1. Therefore, by connecting to the network device 2, the plurality of electronic devices 1 can be located in the same local area network. In the local area network, all electronic devices 1 may be considered to be in a same network, and may freely communicate with each other. If one client 10 in the local area network sends broadcast information, all other clients 10 in the local area network may receive the broadcast information. Each electronic device 1 is further connected to a server 3. In FIG. 1, the electronic device 1 is wirelessly connected to the server 3. Obviously, the electronic device 1 and the server 3 are not limited to a wireless connection in FIG. 1, but may also be wiredly connected. The electronic device 1 may transmit a web page request to the server 3, receive web page information transmitted by the server 3 based on the web page request, and load and display a web page based on the web page information.

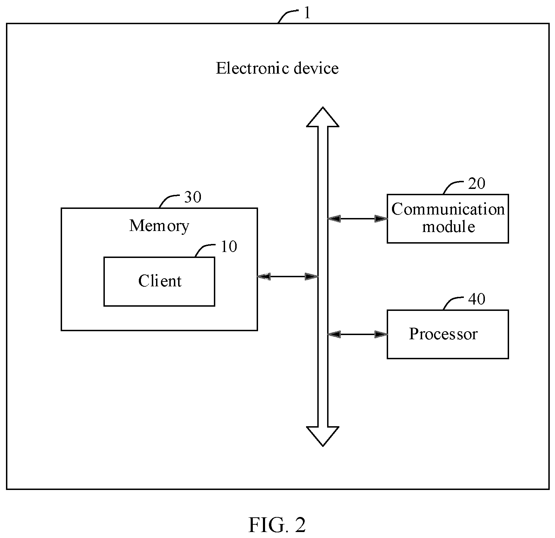

FIG. 2 is a schematic diagram of an electronic device according to an embodiment of the present invention. The electronic device 1 may include a mobile phone, a tablet computer, a PDA (Personal Digital Assistant, personal digital assistant), a wearable device, and the like. As shown in FIG. 2, the electronic device not only includes a client 10 and a communication module 20, but also includes components such as a memory 30 and a processor 40. A person skilled in the art may understand that a structure shown in FIG. 2 does not constitute a limitation on the electronic device 1. The electronic device 1 may include more or fewer components than those shown in the figure, or combine some components, or split some components, or have different component arrangements.

The memory 30 may be configured to store the client. The memory 30 may be further configured to store another software program and/or module/unit. The processor 40 implements various functions of the electronic device 1 by running or executing the software program and/or the module/unit stored in the memory 30 and invoking data stored in the memory 30. The memory 30 may mainly include a program storage area and a data storage area. The program storage area may store an operating system, an application program required by at least one function (such as a web page browsing function, a sound playing function, and an image playing function), and the like. The data storage area may store data (such as audio data) created according to use of the electronic device 1, and the like. In addition, the memory 30 may include a non-volatile computer-readable memory, for example, a hard disk, an internal storage, a plug-in hard disk, a smart media card (Smart Media Card, SMC), a secure digital (Secure Digital, SD) card, a flash card (Flash Card), at least one magnetic disk storage device, a flash memory device, or another non-volatile solid-state storage device.

The processor 40 may be a central processing unit (Central Processing Unit, CPU), or may be another general-purpose processor, a digital signal processor (Digital Signal Processor, DSP), an application specific integrated circuit (Application Specific Integrated Circuit, ASIC), a field-programmable gate array (Field-Programmable Gate Array, FPGA) or another programmable logic device, a discrete gate, a transistor logic device, a discrete hardware component, or the like. The processor 40 may be a microprocessor, or the processor 40 may be any conventional processor, or the like. The processor 40 is a control center of the electronic device 1, and all parts of the entire electronic device 1 are connected by using various interfaces and lines.

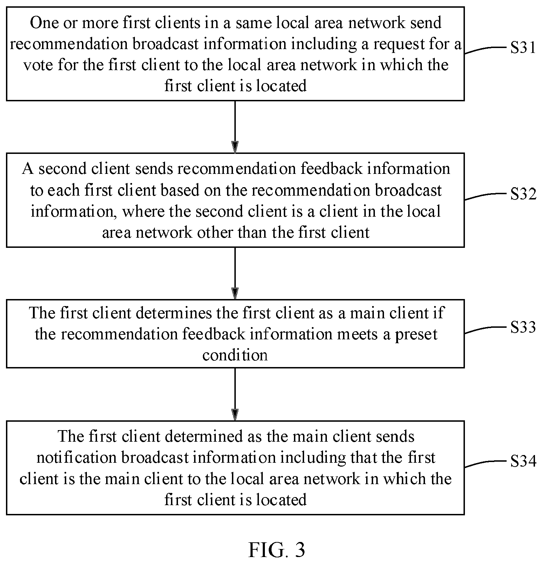

FIG. 3 is a flowchart of a method for determining a main client in a web page advertisement filtering method according to an embodiment of the present invention. The method for determining a main client in the web page advertisement filtering method includes:
S31: One or more first clients in a same local area network send recommendation broadcast information including a request for a vote for the first client to the local area network in which the first client is located.

The one or more first clients are clients that simultaneously initiate requests for votes for the first clients. In this embodiment, the one or more first clients are a client 1. In another embodiment, the one or more first clients may be, for example, a client 1 and a client 2. Each first client may send the recommendation broadcast information including the request for the vote for each first client to the local area network. For example, the client 1 sends information including a request for a vote for the client 1 to the local area network, and the client 2 sends information including a request for a vote for the client 2 to the local area network. In the local area network, all other clients other than the first client can receive the broadcast information sent by the first client.

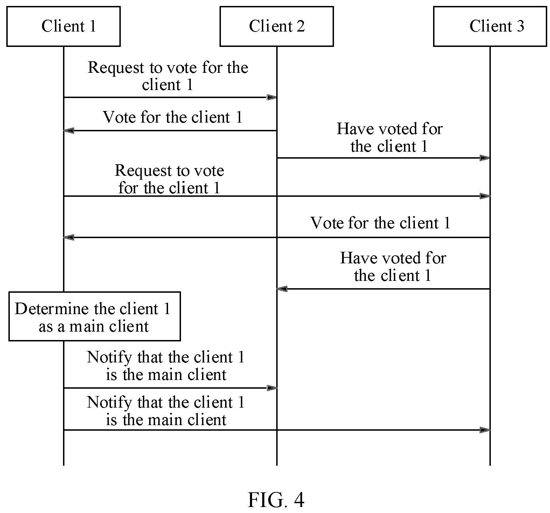

In this embodiment, as shown in FIG. 4, the local area network includes, for example, a client 1, a client 2, and a client 3. The client 1 simultaneously sends recommendation broadcast information including a request for a vote for the client 1 to the client 2 and the client 3.

S32: A second client sends recommendation feedback information to each first client based on the recommendation broadcast information, where the second client is a client in the local area network other than the first client.

There may be one or more second clients. The recommendation feedback information includes voting for the first client or not voting for the first client. Each client has one vote, that is, may vote for one client to elect the client as a main client.

In this embodiment, the second client includes, for example, the client 2 and the client 3 shown in FIG. 4. The client 2 votes for the client 1 based on the recommendation broadcast information. The client 3 votes for the client 1 based on the recommendation broadcast information.

To prevent another client from requesting a vote from the client after the client completes voting, the client 2 further transmits, to the client 3, information indicating that the client 1 has been voted, and the client 3 further transmits, to the client 2, information indicating that the client 1 has been voted.

S33: The first client determines the first client as the main client if the recommendation feedback information meets a preset condition.

The preset condition includes a quantity of received votes is greater than or equal to a preset quantity, a proportion of received votes is greater than a preset value, or the like. In this embodiment, the client 1, for example, as shown in FIG. 4, determines the client 1 as the main client after receiving votes of the client 2 and the client 3. In this case, the client 1 is the main client. There is one main client in one local area network.

S34: The first client determined as the main client sends notification broadcast information including that the first client is the main client to the local area network in which the first client is located.

For example, as shown in FIG. 4, the client 1 sends notification broadcast information including that the client 1 is the main client to the client 2 and the client 3.

In this embodiment, the method further includes:
If the recommendation feedback information does not meet the preset condition, the first client determines that the first client is not the main client.

In this case, the another client, for example, the client 3, may send recommendation broadcast information including a request for a vote for the another client to the local area network in which the client is located.

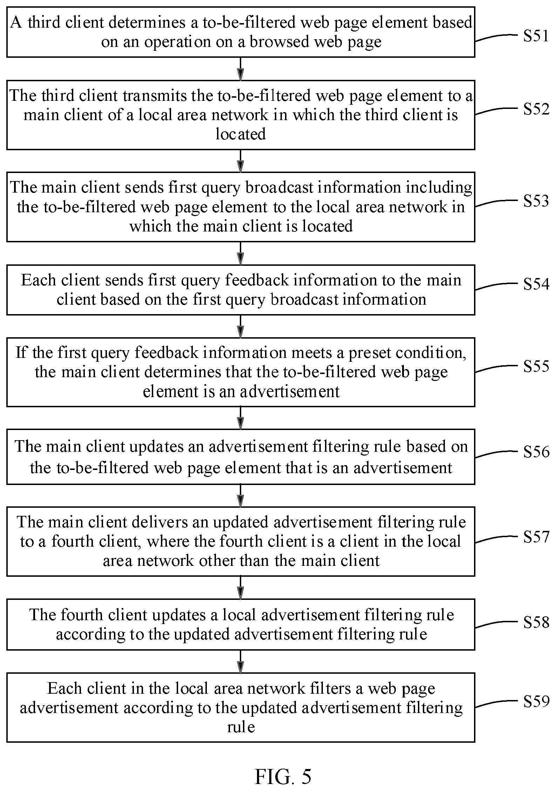

FIG. 5 is a flowchart of an advertisement filtering rule generation method in a web page advertisement filtering method according to an embodiment of the present invention. The advertisement filtering rule generation method in the web page advertisement filtering method includes:

S51: A third client determines a to-be-filtered web page element based on an operation on a browsed web page.

The operation on the browsed web page may include an operation such as touching and holding or right-clicking specific content on the browsed web page. In this case, a browser displays a selection dialog box. The selection dialog box includes an option "mark as advertisement". The operation on the browsed web page may further include a selection operation on the option "mark as advertisement". The third client is any client in the local area network other than the main client. Determining the to-be-filtered web page element is determining the to-be-filtered web page element based on content of the operation.

For example, content of an HTML web page is as follows:

```
         <html>
         <head>
         <title >My first HTML page</title>
         </head>
         <body>
         <div id="TopBanner_02" class="jy_fx168_default_head_navAdBox_middle " ></div>
         <p >body content of an element is displayed in a browser. </p>
         <p >title the content of the element is displayed in a title bar of the browser. </p>
         <img src="http://png.zhongwangmy.cn/jpg/200" >abc.img</ img>
         <svg xmlns="http://www.w3.org/2000/svg" version=" 1.1" height=" 190">
          <polygon points=" 100,10 40,180 190,60 10.60 160,180"
           style="fill:lime;stroke:purple;stroke-width:5;fill-rule:evenodd;" />
         </svg>
         </body>
         </html>
```

If a web page element corresponding to the content of the operation is: <img src="http://png.zhongwangmy.cn/jpg/200" >abc.img</ img>, key information in the web page element, for example, png.zhongwangmy.cn/jpg/200, is determined as the to-be-filtered web page element, that is, an advertisement.

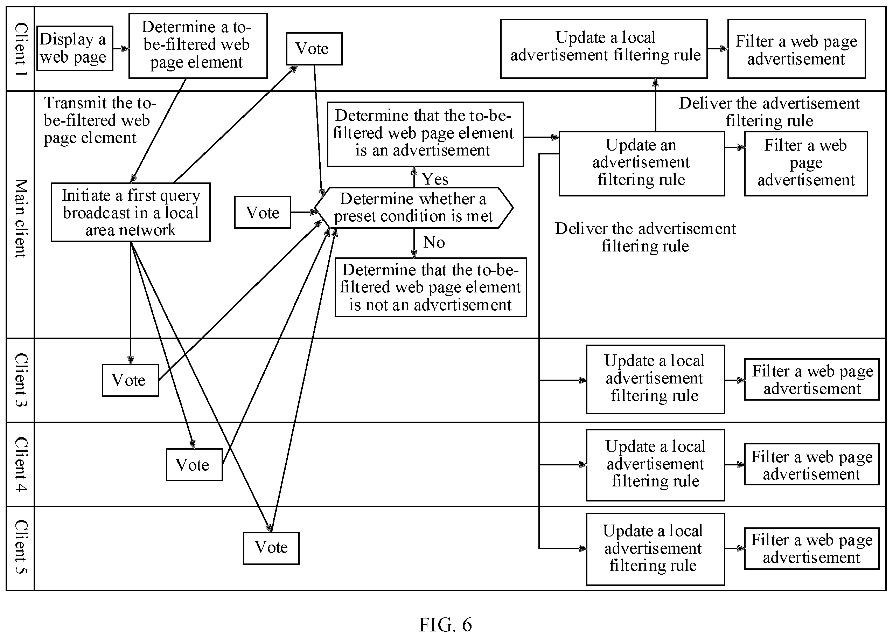

Referring to FIG. 6, that a third client determines a to-be-filtered web page element based on an operation on a browsed web page may be: for example, the client 1 displays a web page for a user to browse, and determines the to-be-filtered web page element according to marked content.

S52: The third client transmits the to-be-filtered web page element to the main client of the local area network in which the third client is located.

In this embodiment, the third client transmits the to-be-filtered web page element to the main client in an agreed manner, so that the main client may determine, in the agreed manner, that received content is the to-be-filtered web page element. For example, the third client transmits adltems: ["png.zhongwangmy.cn/jpg/200"] to the main client.

That the third client transmits the to-be-filtered web page element to the main client may be, for example, as shown in FIG. 6, the client 1 transmits the to-be-filtered web page element to the main client.

S53: The main client sends first query broadcast information including the to-be-filtered web page element to the local area network in which the main client is located.

In this embodiment, after receiving adltems: ["png.zhongwangmy.cn/jpg/200"] transmitted by the third client, the main client parses out keywords adltems and png.zhongwangmy.cn/jpg/200, and determines png.zhongwangmy.cn/jpg/200 as the to-be-filtered web page element according to the keyword adltems.

Before that the main client sends first query broadcast information including the to-be-filtered web page element to the local area network in which the main client is located, the method further includes:
After receiving to-be-filtered web page element within a preset time, the main client sends the first query broadcast information including the to-be-filtered web page element to the local area network in which the main client is located.

The to-be-filtered web page element within the preset time may be two to-be-filtered web page elements transmitted by the third client within the preset time, or may be to-be-filtered web page elements transmitted by the third client and another client within the preset time. The preset time may be, for example, one week or three days.

That the main client sends first query broadcast information including the to-be-filtered web page element to the local area network in which the main client is located may be, for example, as shown in FIG. 6, the local area network includes, for example, a client 1, a client 2, a client 3, a client 4, and a client 5. The client 2 is the main client. The client 2 simultaneously sends the first query broadcast information including the to-be-filtered web page element to the client 1, the client 3, the client 4, and the client 5.

S54: Each client sends first query feedback information to the main client based on the first query broadcast information.

The first query feedback information includes that the to-be-filtered web page element is voted as an advertisement and the to-be-filtered web page element is voted as being not an advertisement. Each client has one vote for each to-be-filtered web page element. For example, each client may vote a to-be-filtered web page element 1 as being an advertisement or being not an advertisement, but cannot vote the to-be-filtered web page element 1 as being an advertisement and being not an advertisement. Each piece of first query feedback information may correspond to one to-be-filtered web page element, or each piece of first query feedback information corresponds to a plurality of to-be-filtered web page elements.

In this embodiment, for example, as shown in FIG. 6, the client 1, the client 2, the client 3, the client 4, and the client 5 all send the first query feedback information to the client 2 based on the first query broadcast information, that is, vote the to-be-filtered web page element as being an advertisement or being not an advertisement.

S55: If the first query feedback information meets a preset condition, the main client determines that the to-be-filtered web page element is an advertisement.

The preset condition may include: a quantity of received votes for which the to-be-filtered web page element is an advertisement is greater than a quantity of received votes for which the to-be-filtered web page element is not an advertisement, or a proportion of received votes for which the to-be-filtered web page element is an advertisement is greater than a preset value, or the like. The first query feedback information is first query feedback information of one to-be-filtered web page element or first query feedback information of some to-be-filtered web page elements.

In this embodiment, the main client, that is, the client 2, for example, as shown in FIG. 6, determines whether the first query feedback information meets the preset condition, and determines, based on the first query feedback information, that the to-be-filtered web page element 1 is an advertisement.

S56: The main client updates an advertisement filtering rule based on the to-be-filtered web page element that is an advertisement.

There may be one or more to-be-filtered web page elements being an advertisement. The advertisement filtering rule may be, for example, easylist.txt. The advertisement filtering rule records a large amount of advertisement information, for example, png.zhongwangmy.crt/jpg/201. Updating the advertisement filtering rule may be, for example, adding png.zhongwangmy.cn/jpg/200 to the advertisement filtering rule.

In this embodiment, the main client, that is, the client 2, for example, as shown in FIG. 6, updates the advertisement filtering rule based on the to-be-filtered web page element that is an advertisement.

S57: The main client delivers an updated advertisement filtering rule to a fourth client, where the fourth client is a client in the local area network other than the main client.

There may be one or more fourth clients. In this embodiment, the main client, that is, the client 2, for example, as shown in FIG. 6, delivers the updated advertisement filtering rule to the client 1, the client 3, the client 4, and the client 5.

S58: The fourth client updates a local advertisement filtering rule according to the updated advertisement filtering rule.

Each client includes an advertisement filtering rule, and filters a web page advertisement according to the advertisement filtering rule. In this embodiment, as shown in FIG. 6, the client 1 updates an advertisement filtering rule of the client 1 according to the updated advertisement filtering rule, the client 3 updates an advertisement filtering rule of the client 3 according to the updated advertisement filtering rule, the client 4 updates an advertisement filtering rule of the client 4 according to the updated advertisement filtering rule, and the client 5 updates an advertisement filtering rule of the client 5 according to the updated advertisement filtering rule.

S59: Each client in the local area network filters the web page advertisement according to the updated advertisement filtering rule.

The web page element of the web page includes separately downloaded resources, for example, multimedia and JS. Before downloading the web page element, the client matches the web page element with the updated advertisement filtering rule. If the web page element matches the updated advertisement filtering rule, the client does not download the web page element. If the web page element does not match the updated advertisement filtering rule, the client downloads the web page element. For example, if the client attempts to download a resource corresponding to png.zhongwangmy.cn/jpg/200, and the client determines that the web page element matches the updated advertisement filtering rule, the client does not download the web page element, to filter a web page advertisement.

In this embodiment, as shown in FIG. 6, the client 1 filters a web page advertisement according to the updated advertisement filtering rule, the client 2 filters a web page advertisement according to the updated advertisement filtering rule, the client 3 filters a web page advertisement according to the updated advertisement filtering rule, the client 4 filters a web page advertisement according to the updated advertisement filtering rule, and the client 5 filters a web page advertisement according to the updated advertisement filtering rule.

In this embodiment, the method further includes:
If the first query feedback information does not meet the preset condition, the main client determines that the to-be-filtered web page element is not an advertisement.

In this embodiment, the main client, that is, the client 2, for example, as shown in FIG. 6, determines, based on the first query feedback information, that a to-be-filtered web page element 2 is not an advertisement.

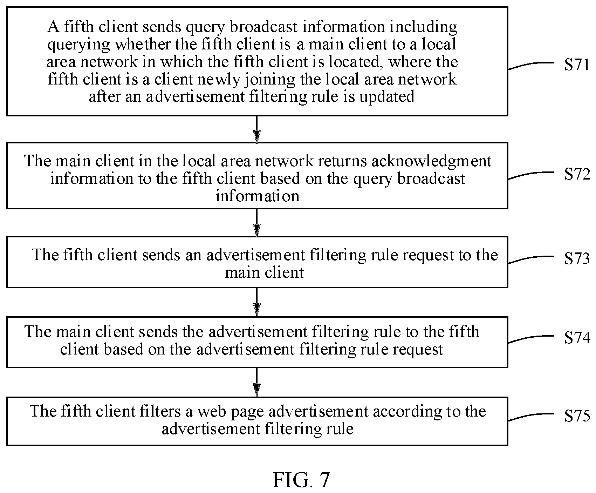

FIG. 7 is a flowchart of a method for blocking an advertisement by a fifth client in a local area network in a web page advertisement filtering method according to an embodiment of the present invention. The method for blocking an advertisement by a fifth client in a local area network in the web page advertisement filtering method includes:

S71: The fifth client sends query broadcast information including querying whether the fifth client is the main client to a local area network in which the fifth client is located, where the fifth client is a client newly joining the local area network after the advertisement filtering rule is updated.

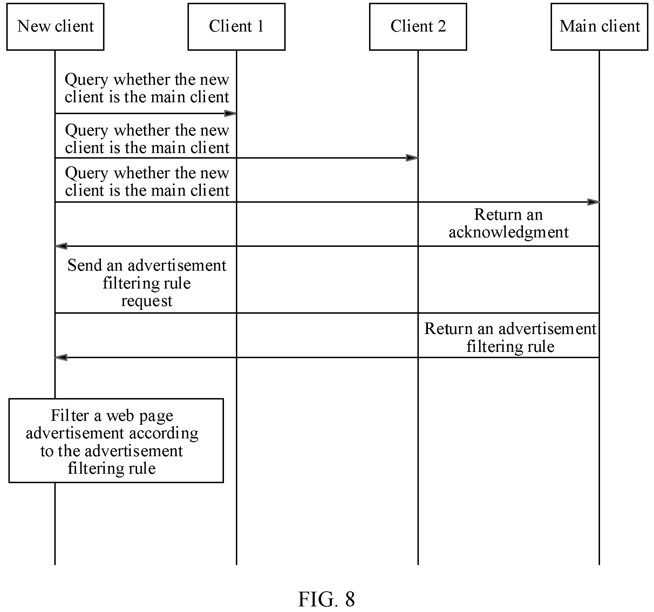

The fifth client is the client newly joining the local area network. The fifth client may freely communicate with any client in the local area network. Referring to FIG. 8, the local area network includes, for example, a fifth client, a client 1, a client 2, and a client 3. The fifth client is the client newly joining the local area network after the advertisement filtering rule is updated, that is, a new client. The client 3 is the main client. The fifth client sends the query broadcast information including querying whether the fifth client is the main client to the client 1, the client 2, and the main client.

S72: The main client in the local area network returns acknowledgment information to the fifth client based on the query broadcast information.

As shown in FIG. 8, the main client, that is, the client 3, returns the acknowledgment information to the fifth client based on the query broadcast information.

S73: The fifth client sends an advertisement filtering rule request to the main client.

As shown in FIG. 8, the fifth client sends the advertisement filtering rule request to the main client, that is, the client 3.

S74: The main client sends the advertisement filtering rule to the fifth client based on the advertisement filtering rule request.

The main client includes the advertisement filtering rule, and the main client filters a web page advertisement according to the advertisement filtering rule. As shown in FIG. 8, the main client, that is, the client 3, returns the advertisement filtering rule to the fifth client.

S75: The fifth client filters a web page advertisement according to the advertisement filtering rule.

As shown in FIG. 8, the fifth client filters the web page advertisement according to the advertisement filtering rule.

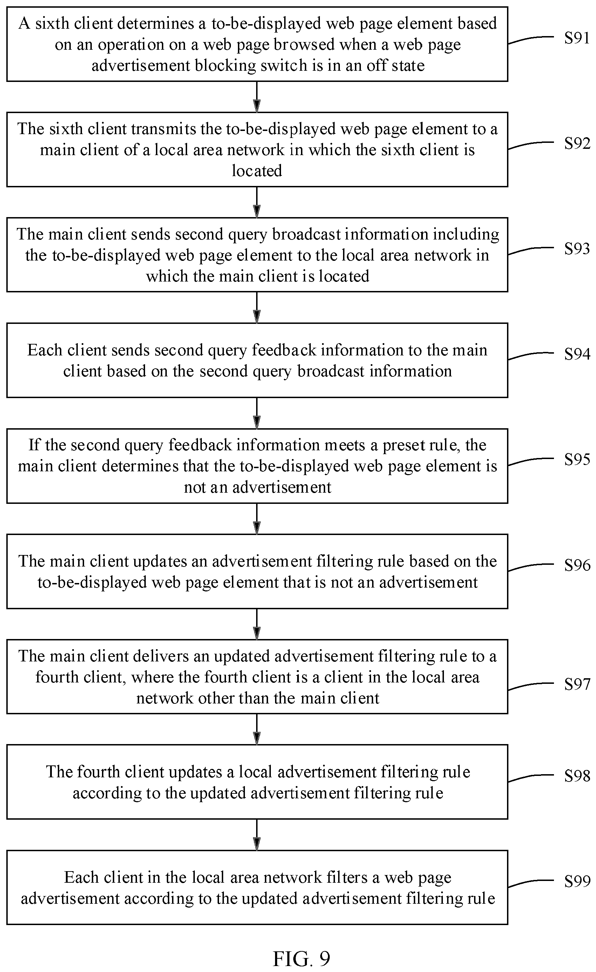

FIG. 9 is a flowchart of an advertisement filtering rule re-generation method in a web page advertisement filtering method according to an embodiment of the present invention. The advertisement filtering rule re-generation method in the web page advertisement filtering method includes:
S91: A sixth client determines a to-be-displayed web page element based on an operation on a web page browsed when a web page advertisement blocking switch is in an off state.

The sixth client is any client in a local area network other than a main client. Each client includes a web page advertisement blocking switch. If the web page advertisement blocking switch is in an on state, the client does not display an advertisement. If the web page advertisement blocking switch is in the off state, the client displays an advertisement. When it needs to determine which web page elements are to be displayed, the web page advertisement blocking switch may be switched from the on state to the off state or from the off state to the on state. In this way, by comparing a result obtained when an advertisement is blocked with a result obtained when no advertisement is blocked, the user may determine which web page elements are blocked, and determine which web page elements do not want to be blocked.

The operation on the browsed web page may include an operation such as touching and holding or right-clicking specific content on the browsed web page. In this case, a browser displays a selection dialog box. The selection dialog box includes an option "mark as non-advertisement". The operation on the browsed web page may further include a selection operation on the option "mark as non-advertisement". Determining the to-be-filtered web page element is determining the to-be-displayed web page element based on content of the operation.

For example, content of an HTML web page is as follows:

```
         <html>
         <head>
         <title >My first HTML page</title>
         </head>
         <body>
         <div id="TopBanner_02" class="jy_fx168_default_head_navAdBox_middle " ></div>
         <p >body content of an element is displayed in a browser. </p>
         <p >title the content of the element is displayed in a title bar of the browser. </p>
         <img src="http://png.zhongwangmy.cn/jpg/205" >abc.img</ img>
         <svg xmlns="http://www.w3.org/2000/svg" version="1.1" height=" 190">
          <polygon points="100,10 40,180 190,60 10.60 160,180"
           style="fill:lime;stroke:purple;stroke-width:5;fill-rule:evenodd;" />
         </svg>
         </body>
         </html>
```

If a web page element corresponding to the content of the operation is: <img src="http://png.zhongwangmy.cn/jpg/205" >abc.img</ img>, key information in the web page element, for example, png.zhongwangmy.cn/jpg/205, is determined as the to-be-displayed web page element.

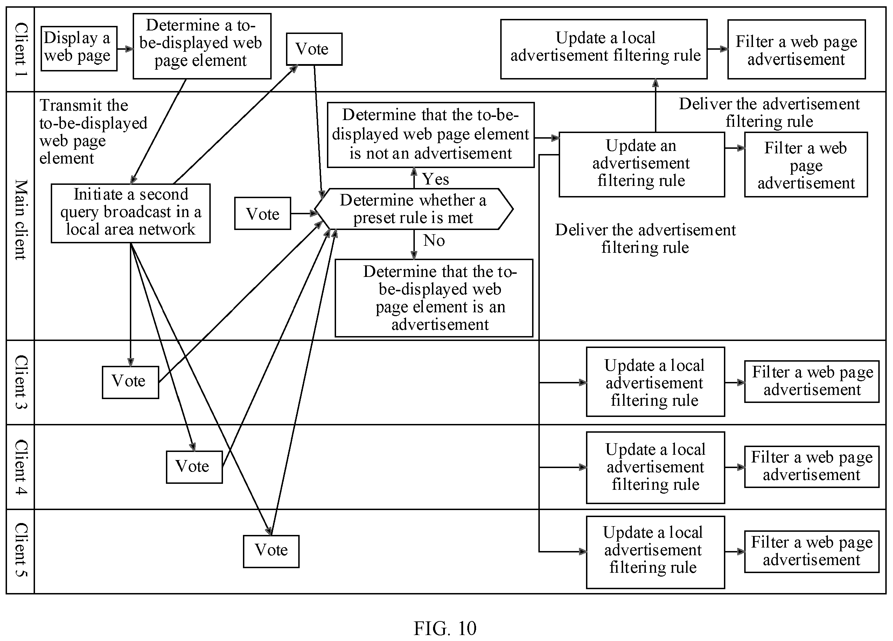

Referring to FIG. 10, that a sixth client determines a to-be-displayed web page element based on an operation on a web page browsed when a web page advertisement blocking switch is in an off state may be: for example, the client 2 displays, based on an operation of turning off the web page advertisement blocking switch, the web page for the user to browse, and determines the to-be-displayed web page element based on marked content.

S92: The sixth client transmits the to-be-displayed web page element to the main client of the local area network in which the sixth client is located.

In this embodiment, the sixth client transmits the to-be-displayed web page element to the main client in an agreed manner, so that the main client may determine, in the agreed manner, that received content is the to-be-displayed web page element. For example, the sixth client transmits notadltems: ["png.zhongwangmy.cn/jpg/205"] to the main client.

That the sixth client transmits the to-be-displayed web page element to the main client may be, for example, as shown in FIG. 10, the client 2 transmits the to-be-displayed web page element to the main client.

S93: The main client sends second query broadcast information including the to-be-displayed web page element to the local area network in which the main client is located.

In this embodiment, after receiving notadltems: ["png.zhongwangmy.cn/jpg/205"] transmitted by the sixth client, the main client parses out keywords notadltems and png.zhongwangmy.cn/jpg/205, and determines png.zhongwangmy.cn/jpg/205 as the to-be-displayed web page element according to the keyword notadltems.

Before that the main client sends second query broadcast information including the to-be-displayed web page element to the local area network in which the main client is located, the method further includes:
After receiving the to-be-displayed web page element within a preset time, the main client sends the second query broadcast information including the to-be-displayed web page element to the local area network in which the main client is located.

The to-be-displayed web page element within the preset time may be two to-be-displayed web page elements transmitted by the sixth client within the preset time, or may be to-be-displayed web page elements transmitted by the sixth client and another client within the preset time. The preset time may be, for example, one week or three days.

That the main client sends second query broadcast information including the to-be-displayed web page element to the local area network in which the main client is located may be, for example, as shown in FIG. 10, the local area network includes, for example, a client 1, a client 2, a client 3, a client 4, and a client 5. The client 2 is the main client. The client 2 simultaneously sends the second query broadcast information including the to-be-displayed web page element to the client 1, the client 3, the client 4, and the client 5.

S94: Each client sends second query feedback information to the main client based on the second query broadcast information.

The second query feedback information includes that the to-be-displayed web page element is voted as an advertisement and the to-be-displayed web page element is voted as being not an advertisement. Each client has one vote for each to-be-displayed web page element. For example, each client may vote a to-be-displayed web page element 1 as being an advertisement or being not an advertisement, but cannot vote the to-be-displayed web page element 1 as being an advertisement and being not an advertisement. Each piece of second query feedback information may correspond to one to-be-displayed web page element, or each piece of second query feedback information corresponds to a plurality of to-be-displayed web page elements.

In this embodiment, for example, as shown in FIG. 10, the client 1, the client 2, the client 3, the client 4, and the client 5 all send the second query feedback information to the client 2 based on the second query broadcast information, that is, vote the to-be-displayed web page element as being an advertisement or being not an advertisement.

S95: If the second query feedback information meets a preset rule, the main client determines that the to-be-displayed web page element is not an advertisement.

The preset rule may include: a quantity of received votes for which the to-be-displayed web page element is not an advertisement is greater than a quantity of received votes for which the to-be-displayed web page element is an advertisement, or a proportion of received votes for which the to-be-displayed web page element is not an advertisement is greater than a preset value, or the like. The second query feedback information is second query feedback information of one to-be-displayed web page element or second query feedback information of some to-be-displayed web page elements.

In this embodiment, the main client, that is, the client 2, for example, as shown in FIG. 10, determines whether the second query feedback information meets the preset rule, and determines, based on the second query feedback information, that the to-be-displayed web page element 3 is not an advertisement.

S96: The main client updates the advertisement filtering rule based on the to-be-displayed web page element that is not an advertisement.

There may be one or more to-be-displayed web page elements being not an advertisement. The advertisement filtering rule may be, for example, easylist.txt. The advertisement filtering rule records a large amount of advertisement information, for example, png.zhongwangmy.cn/jpg/205. Updating the advertisement filtering rule may be, for example, deleting png.zhongwangmy.cn/jpg/205 from the advertisement filtering rule.

In this embodiment, the main client, that is, the client 2, for example, as shown in FIG. 10, updates the advertisement filtering rule based on the to-be-displayed web page element that is not an advertisement.

S97: The main client delivers an updated advertisement filtering rule to a fourth client, where the fourth client is a client in the local area network other than the main client.

There may be one or more fourth clients. In this embodiment, the main client, that is, the client 2, for example, as shown in FIG. 10, delivers the updated advertisement filtering rule to the client 1, the client 3, the client 4, and the client 5.

S98: The fourth client updates a local advertisement filtering rule according to the updated advertisement filtering rule.

Each client includes an advertisement filtering rule, and filters a web page advertisement according to the advertisement filtering rule. In this embodiment, as shown in FIG. 10, the client 1 updates an advertisement filtering rule of the client 1 according to the updated advertisement filtering rule, the client 3 updates an advertisement filtering rule of the client 3 according to the updated advertisement filtering rule, the client 4 updates an advertisement filtering rule of the client 4 according to the updated advertisement filtering rule, and the client 5 updates an advertisement filtering rule of the client 5 according to the updated advertisement filtering rule.

S99: Each client in the local area network filters the web page advertisement according to the updated advertisement filtering rule.

The web page element of the web page includes separately downloaded resources, for example, multimedia and JS. Before downloading the web page element, the client matches the web page element with the updated advertisement filtering rule. If the web page element matches the updated advertisement filtering rule, the client does not download the web page element. If the web page element does not match the updated advertisement filtering rule, the client downloads the web page element. For example, if the client attempts to download a resource corresponding to png.zhongwangmy.cn/jpg/205, and the client determines that the web page element does not match the updated advertisement filtering rule, the client downloads the web page element, to not filter the web page element.

In this embodiment, as shown in FIG. 10, the client 1 filters a web page advertisement according to the updated advertisement filtering rule, the client 2 filters a web page advertisement according to the updated advertisement filtering rule, the client 3 filters a web page advertisement according to the updated advertisement filtering rule, the client 4 filters a web page advertisement according to the updated advertisement filtering rule, and the client 5 filters a web page advertisement according to the updated advertisement filtering rule.

In this embodiment, the method further includes:
If the second query feedback information does not meet the preset rule, the main client determines that the to-be-displayed web page element is an advertisement.

In this embodiment, the main client, that is, the client 2, for example, as shown in FIG. 10, determines, based on the second query feedback information, that a to-be-displayed web page element 2 is an advertisement.

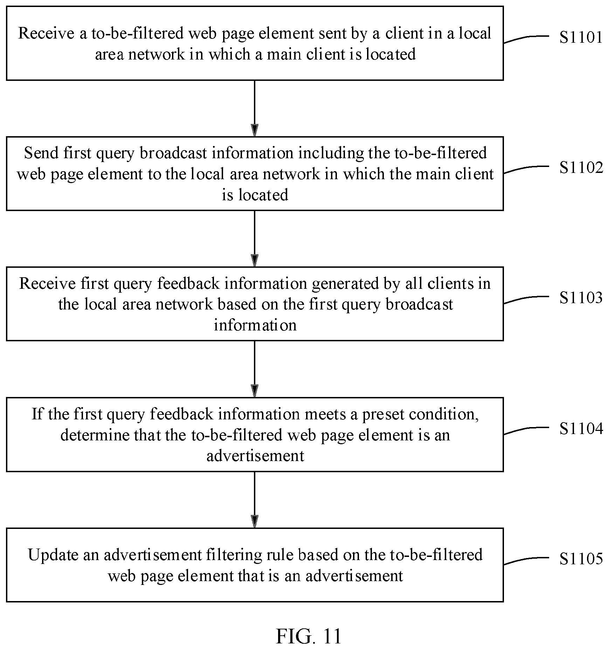

FIG. 11 is a flowchart of a web page advertisement filtering method according to an embodiment of the present invention. The web page advertisement filtering method is applied to a main client. The web page advertisement filtering method includes:
S1101: Receive a to-be-filtered web page element sent by a client in a local area network in which the main client is located.
S1102: Send first query broadcast information including the to-be-filtered web page element to the local area network in which the main client is located.
S1103: Receive first query feedback information generated by all clients in the local area network based on the first query broadcast information.
S1104: If the first query feedback information meets a preset condition, determine that the to-be-filtered web page element is an advertisement.
S1105: Update an advertisement filtering rule based on the to-be-filtered web page element that is an advertisement.

In this embodiment, the method further includes:
delivering an updated advertisement filtering rule to a client in the local area network other than the main client.

In this embodiment, the method further includes:
filtering a web page advertisement according to the updated advertisement filtering rule.

In this embodiment, before the receiving a to-be-filtered web page element sent by a client in a local area network in which the main client is located, the method further includes:
determining, in a plurality of clients located in a same local area network, a first client as the main client.

In this embodiment, the determining, in a plurality of clients located in a same local area network, a first client as the main client includes:
sending recommendation broadcast information including a request for a vote for the first client to the local area network in which the first client is located;
receiving recommendation feedback information generated by a client in the local area network other than the first client based on the recommendation broadcast information; and
determining the first client as the main client if the recommendation feedback information meets a preset condition.

In this embodiment, after the determining the first client as the main client if the recommendation feedback information meets a preset condition, the method further includes:
sending notification broadcast information including that the first client is the main client to the local area network in which the main client is located.

In this embodiment, the method further includes:
receiving query broadcast information that is sent by a fifth client in a local area network in which the fifth client is located and that is used to query whether the fifth client is the main client, where the fifth client is a client newly joining the local area network after the advertisement filtering rule is updated;
returning acknowledgment information to the fifth client based on the query broadcast information;
receiving an advertisement filtering rule request sent by the fifth client; and
sending the advertisement filtering rule to the fifth client based on the advertisement filtering rule request.

In this embodiment, the method further includes:
receiving a to-be-displayed web page element sent by the client in the local area network in which the main client is located;
sending second query broadcast information including the to-be-displayed web page element to the local area network in which the main client is located;
receiving second query feedback information generated by all the clients in the local area network based on the second query broadcast information;
if the second query feedback information meets a preset rule, determining that the to-be-displayed web page element is not an advertisement; and
updating the advertisement filtering rule based on the to-be-displayed web page element that is not an advertisement.

In this embodiment, the method further includes:
delivering an updated advertisement filtering rule to a client in the local area network other than the main client.

In this solution, by receiving the to-be-filtered web page element sent by the client in the local area network in which the main client is located, a vote is initiated in the local area network, whether the to-be-filtered web page element is an advertisement is determined through voting, and the advertisement filtering rule is generated accordingly. Therefore, an existing client can generate the advertisement filtering rule without intervention and existence of a server. By delivering the advertisement filtering rule to the other clients in the local area network other than the main client, the advertisement filtering rule can be synchronized to all the clients in the local area network without relying on a function of the server for delivering the advertisement filtering rule to the clients. When the fifth client is added to the local area network, even the newly added client can obtain the advertisement filtering rule without re-learning or relying on the server. By receiving the to-be-displayed web page element sent by the client in the local area network in which the main client is located, a vote is initiated in the local area network, whether the to-be-displayed web page element is an advertisement is determined through voting, and the advertisement filtering rule is generated accordingly, so that the web page element can be corrected in a scenario in which the web page element is incorrectly determined as an advertisement. Therefore, the existing client can update the advertisement filtering rule without intervention and existence of the server.

## Claims

1. A web page advertisement filtering method, carried out by a user-independent main client included in an electronic device, wherein the method comprises:
receiving (S1101) a to-be-filtered web page element sent by a client in a local area network in which the main client is located;
sending (S1102) first query broadcast information comprising the to-be-filtered web page element to the local area network in which the main client is located;
receiving (S1103) first query feedback information generated by all clients in the local area network based on the first query broadcast information;
if (S1104) the first query feedback information meets a preset condition, determining that the to-be-filtered web page element is an advertisement; and
updating (S1105) an advertisement filtering rule based on the to-be-filtered web page element that is an advertisement.

2. The web page advertisement filtering method according to claim 1, wherein the method further comprises:
delivering an updated advertisement filtering rule to a client in the local area network other than the main client.

3. The web page advertisement filtering method according to claim 1, wherein the method further comprises:
filtering a web page advertisement according to the updated advertisement filtering rule.

4. The web page advertisement filtering method according to claim 1, wherein before the receiving a to-be-filtered web page element sent by a client in a local area network in which the main client is located, the method further comprises:
determining, in a plurality of clients located in a same local area network, a first client as the main client.

5. The web page advertisement filtering method according to claim 4, wherein the determining, in a plurality of clients located in a same local area network, a first client as the main client comprises:
sending recommendation broadcast information comprising a request for a vote for the first client to the local area network in which the first client is located;
receiving recommendation feedback information generated by a client in the local area network other than the first client based on the recommendation broadcast information; and
determining the first client as the main client if the recommendation feedback information meets a preset condition.

6. The web page advertisement filtering method according to claim 5, wherein after the determining the first client as the main client if the recommendation feedback information meets a preset condition, the method further comprises:
sending notification broadcast information comprising that the first client is the main client to the local area network in which the main client is located.

7. The web page advertisement filtering method according to claim 1, wherein the method further comprises:
receiving query broadcast information that is sent by a fifth client in a local area network in which the fifth client is located and that is used to query whether the fifth client is the main client, wherein the fifth client is a client newly joining the local area network after the advertisement filtering rule is updated;
returning acknowledgment information to the fifth client based on the query broadcast information;
receiving an advertisement filtering rule request sent by the fifth client; and
sending the advertisement filtering rule to the fifth client based on the advertisement filtering rule request.

8. The web page advertisement filtering method according to claim 1, wherein the method further comprises:
receiving a to-be-displayed web page element sent by the client in the local area network in which the main client is located;
sending second query broadcast information comprising the to-be-displayed web page element to the local area network in which the main client is located;
receiving second query feedback information generated by all the clients in the local area network based on the second query broadcast information;
if the second query feedback information meets a preset rule, determining that the to-be-displayed web page element is not an advertisement; and
updating the advertisement filtering rule based on the to-be-displayed web page element that is not an advertisement.

9. An electronic device (1), wherein the electronic device (1) comprises a processor (40) and a memory (30), and the processor (40) is configured to implement the web page advertisement filtering method according to any one of claims 1 to 8 when executing at least one instruction stored in the memory (30).

10. A computer-readable storage medium, wherein the computer-readable storage medium stores at least one instruction, and the at least one instruction is executed by a processor to implement the web page advertisement filtering method according to any one of claims 1 to 8.

## Patentansprüche

1. Verfahren zum Filtern von Webseitenwerbungen, das durch einen benutzerunabhängigen Hauptclient ausgeführt wird, der in einer elektronischen Vorrichtung beinhaltet ist, wobei das Verfahren Folgendes umfasst:
Empfangen (S1101) eines zu filternden Webseitenelements, das durch einen Client in einem lokalen Netzwerk gesendet wird, in dem sich der Hauptclient befindet;
Senden (S1102) von ersten Abfrage-Rundfunkinformationen, die das zu filternde Webseitenelement umfassen, an das lokale Netzwerk, in dem sich der Hauptclient befindet;
Empfangen (S1103) von ersten Abfrage-Rückmeldeinformationen, die durch alle Clients in dem lokalen Netzwerk basierend auf den ersten Abfrage-Rundfunkinformationen erzeugt wurden;
wenn (S1104) die ersten Abfrage-Rückmeldeinformationen eine voreingestellte Bedingung erfüllen, Bestimmen, dass das zu filternde Webseitenelement eine Werbung ist; und
Aktualisieren (S1105) einer Regel zum Filtern von Werbungen basierend auf dem zu filternden Webseitenelement, das eine Werbung ist.

2. Verfahren zum Filtern von Webseitenwerbung nach Anspruch 1, wobei das Verfahren ferner Folgendes umfasst:
Übermitteln einer aktualisierten Regel zum Filtern von Werbungen an einen anderen Client in dem lokalen Netzwerk als den Hauptclient.

3. Verfahren zum Filtern von Webseitenwerbung nach Anspruch 1, wobei das Verfahren ferner Folgendes umfasst:
Filtern einer Webseitenwerbung gemäß der aktualisierten Regel zum Filtern von Werbungen.

4. Verfahren zum Filtern von Webseitenwerbungen nach Anspruch 1, wobei das Verfahren vor dem Empfangen eines zu filternden Webseitenelements, das durch einen Client in einem lokalen Netzwerk, in dem sich der Hauptclient befindet, gesendet wird, ferner Folgendes umfasst:
Bestimmen eines ersten Clients aus einer Vielzahl von Clients, die sich in einem gleichen lokalen Netzwerk befindet, als Hauptclient.

5. Verfahren zum Filtern von Webseitenwerbungen nach Anspruch 4, wobei das Bestimmen eines ersten Clients aus einer Vielzahl von Clients, die sich in einem gleichen lokalen Netzwerk befindet, als Hauptclient Folgendes umfasst:
Senden von Empfehlungs-Rundfunkinformationen, die eine Anfrage nach einer Abstimmung über den ersten Client umfassen, an das lokale Netzwerk, in dem sich der erste Client befindet;
Empfangen von Empfehlungs-Rückmeldeinformationen, die durch einen anderen Client in dem lokalen Netzwerk als dem ersten Client basierend auf den Empfehlungs-Rundfunkinformationen erzeugt werden; und
Bestimmen des ersten Clients als Hauptclient, wenn die Empfehlungs-Rückmeldeinformationen eine voreingestellte Bedingung erfüllen.

6. Verfahren zum Filtern von Webseitenwerbungen nach Anspruch 5, wobei nach dem Bestimmen des ersten Clients als Hauptclient, wenn die Empfehlungs-Rückmeldeinformationen eine vorgegebene Bedingung erfüllen, das Verfahren ferner Folgendes umfasst:
Senden von Benachrichtigungs-Rundfunkinformationen, die umfassen, dass der erste Client der Hauptclient ist, an das lokale Netzwerk, in dem sich der Hauptclient befindet.

7. Verfahren zum Filtern von Webseitenwerbung nach Anspruch 1, wobei das Verfahren ferner Folgendes umfasst:
Empfangen von Abfrage-Rundfunkinformationen, die durch einen fünften Client in einem lokalen Netzwerk gesendet werden, in dem sich der fünfte Client befindet, und die verwendet werden, um abzufragen, ob der fünfte Client der Hauptclient ist, wobei der fünfte Client ein Client ist, der dem lokalen Netzwerk neu beitritt, nachdem die Regel zum Filtern von Werbungen aktualisiert wird;
Rücksenden von Bestätigungsinformationen an den fünften Client basierend auf den Abfrage-Rundfunkinformationen;
Empfangen einer durch den fünften Client gesendeten Regelanfrage zum Filtern von Werbungen; und
Senden der Regel zum Filtern von Werbungen an den fünften Client basierend auf der Regelanfrage zum Filtern von Werbungen.

8. Verfahren zum Filtern von Webseitenwerbung nach Anspruch 1, wobei das Verfahren ferner Folgendes umfasst:
Empfangen eines anzuzeigenden Webseitenelements, das durch den Client in dem lokalen Netzwerk gesendet wird, in dem sich der Hauptclient befindet;
Senden von zweiten Abfrage-Rundfunkinformationen, die das anzuzeigende Webseitenelement umfassen, an das lokale Netzwerk, in dem sich der Hauptclient befindet;
Empfangen von zweiten Abfrage-Rückmeldeinformationen, die durch alle Clients in dem lokalen Netzwerk basierend auf den zweiten Abfrage-Rundfunkinformationen erzeugt wurden;
wenn die zweite Abfrage-Rückmeldeinformationen eine voreingestellte Regel erfüllen, Bestimmen, dass das zu anzuzeigende Webseitenelement keine Werbung ist; und
Aktualisieren der Regel zum Filtern von Werbungen basierend auf dem anzuzeigenden Webseitenelement, das keine Werbung ist.

9. Elektronische Vorrichtung (1), wobei die elektronische Vorrichtung (1) einen Prozessor (40) und einen Speicher (30) umfasst und der Prozessor (40) dazu konfiguriert ist, das Verfahren zum Filtern von Webseitenwerbungen nach einem der Ansprüche 1 bis 8 zu implementieren, wenn er mindestens eine in dem Speicher (30) gespeicherte Anweisung ausführt.

10. Computerlesbares Speichermedium, wobei das computerlesbare Speichermedium mindestens eine Anweisung speichert und die mindestens eine Anweisung durch einen Prozessor ausgeführt wird, um das Verfahren zum Filtern von Webseitenwerbungen nach einem der Ansprüche 1 bis 8 zu implementieren.

## Revendications

1. Procédé de filtrage de publicités de page Web, effectué par un client principal indépendant de l'utilisateur inclus dans un dispositif électronique, dans lequel le procédé comprend :
la réception (S1101) d'un élément de page Web à filtrer envoyé par un client dans un réseau local dans lequel se trouve le client principal ;
l'envoi (S1102) de premières informations de diffusion de requête comprenant l'élément de page Web à filtrer au réseau local dans lequel se trouve le client principal ;
la réception (S1103) de premières informations de retour de requête générées par tous les clients dans le réseau local sur la base des premières informations de diffusion de requête ;
si (S1104) les premières informations de retour de requête répondent à une condition prédéfinie, la détermination que l'élément de page Web à filtrer est une publicité ; et
la mise à jour (S1105) d'une règle de filtrage de publicité sur la base de l'élément de page Web à filtrer qui est une publicité.

2. Procédé de filtrage de publicités de page Web selon la revendication 1, dans lequel le procédé comprend également :
la fourniture d'une règle de filtrage de publicité mise à jour à un client du réseau local autre que le client principal.

3. Procédé de filtrage de publicités de page Web selon la revendication 1, dans lequel le procédé comprend également :
le filtrage d'une publicité de page Web selon la règle de filtrage de publicités mise à jour.

4. Procédé de filtrage de publicités de page Web selon la revendication 1, dans lequel avant la réception d'un élément de page Web à filtrer envoyé par un client d'un réseau local où se trouve le client principal, le procédé comprend également :
la détermination, parmi une pluralité de clients situés dans un même réseau local, d'un premier client comme client principal.

5. Procédé de filtrage de publicités de page Web selon la revendication 4, dans lequel la détermination, dans une pluralité de clients situés dans un même réseau local, d'un premier client comme client principal comprend :
l'envoi d'informations de diffusion de recommandation comprenant une demande de vote pour le premier client au réseau local dans lequel se trouve le premier client ;
la réception d'informations de retour de recommandation générées par un client du réseau local autre que le premier client sur la base des informations de diffusion de recommandation ; et
la détermination du premier client comme client principal si les informations de retour de recommandation répondent à une condition prédéfinie.

6. Procédé de filtrage de publicités de page Web selon la revendication 5, dans lequel après la détermination du premier client comme client principal si les informations de retour de recommandation remplissent une condition prédéfinie, le procédé comprend également :
l'envoi d'informations de diffusion de notification comprenant le fait que le premier client est le client principal au réseau local dans lequel se trouve le client principal.

7. Procédé de filtrage de publicités de page Web selon la revendication 1, dans lequel le procédé comprend également :
la réception d'informations de diffusion de requête qui sont envoyées par un cinquième client dans un réseau local dans lequel le cinquième client est situé et qui sont utilisées pour demander si le cinquième client est le client principal, dans lequel le cinquième client est un client rejoignant nouvellement le réseau local après la mise à jour de la règle de filtrage de publicités ;
le renvoi d'informations d'accusé de réception au cinquième client sur la base des informations de diffusion de la requête ;
la réception d'une demande de règle de filtrage de publicité envoyée par le cinquième client ; et
l'envoi de la règle de filtrage de publicités au cinquième client sur la base de la demande de règle de filtrage de publicités.

8. Procédé de filtrage de publicités de page Web selon la revendication 1, dans lequel le procédé comprend également :
la réception d'un élément de page Web à afficher envoyé par le client dans le réseau local dans lequel se trouve le client principal ;
l'envoi de secondes informations de diffusion de requête comprenant l'élément de page Web à afficher au réseau local dans lequel se trouve le client principal ;
la réception de secondes informations de retour de requête générées par tous les clients dans le réseau local sur la base des secondes informations de diffusion de requête ;
si les secondes informations de retour de requête répondent à une règle prédéfinie, la détermination que l'élément de page Web à afficher n'est pas une publicité ; et
la mise à jour de la règle de filtrage de publicités sur la base de l'élément de page Web à afficher qui n'est pas une publicité.

9. Dispositif électronique (1), dans lequel le dispositif électronique (1) comprend un processeur (40) et une mémoire (30), et le processeur (40) est configuré pour mettre en œuvre le procédé de filtrage de publicité de page Web selon l'une quelconque des revendications 1 à 8 lors de l'exécution d'au moins une instruction stockée dans la mémoire (30).

10. Support de stockage lisible par ordinateur, dans lequel le support de stockage lisible par ordinateur stocke au moins une instruction, et l'au moins une instruction est exécutée par un processeur pour mettre en œuvre le procédé de filtrage de publicités de page Web selon l'une quelconque des revendications 1 à 8.
